# EUROPÄISCHE PATENTSCHRIFT

(11) **EP 2 954 236 B1**
(45) Veröffentlichungstag und Bekanntmachung des Hinweises auf die Patenterteilung: **16.11.2016**
(21) Anmeldenummer: 14721272.4
(22) Anmeldetag: 22.04.2014
(51) Int. Cl.: F16J 15/06, F04D 17/12, F04D 29/08, F04D 29/42, F16J 15/00, F16J 13/08, F04D 29/52, F04D 19/02

(54) **ANORDNUNG MIT EINER DICHTUNG**
ARRANGEMENT HAVING A SEAL
ENSEMBLE DOTÉ D'UN JOINT

(30) Priorität: 07.05.2013 DE 102013208357
(43) Veröffentlichungstag der Anmeldung: 16.12.2015
(73) Patentinhaber: Siemens Aktiengesellschaft, 80333 München (DE)
(72) Erfinder: ZACHARIAS, Wolfgang, 47198 Duisburg (DE)
(86) Internationale Anmeldenummer: PCT/EP2014/058058
(87) Internationale Veröffentlichungsnummer: WO 2014/180650

(56) Entgegenhaltungen:
- DE-A1-102011 108 273
- US-A- 3 642 289
- US-A- 3 975 991
- US-A- 4 335 883

## Beschreibung

Die Erfindung betrifft eine Anordnung mit einer Dichtung umfassend: ein Gehäuse einer Turbomaschine, einen Deckel, mindestens eine Dichtung, wobei das Gehäuse eine Längsachse aufweist, wobei der Deckel zum Verschließen einer stirnseitigen Öffnung des Gehäuses in axialer Richtung in das Gehäuse eingebracht wird.

Ein bevorzugtes Anwendungsgebiet der Erfindung sind Turbomaschinen, insbesondere Turboverdichter. Grundsätzlich lässt sich die Erfindung auch an anderen Druckbehältern einsetzen. Turbomaschinen weisen an vielen Stellen aufgrund ihrer Bauart Trennflächen auf, an denen eine Abdichtung des Fördermediums gegenüber der Umgebung erfolgen muss. Insbesondere bei Gasen, die ein explosives Gemisch mit der Umgebungsluft bilden können, oder die toxische Anteile enthalten, kommt der Abdichtung eine besondere Bedeutung zu. Zur Abdichtung werden unterschiedliche Dichtelemente eingesetzt. Alle üblichen Dichtelemente benötigen eine auf das Dichtelement abgestimmte Oberfläche, die nicht beschädigt werden darf, damit die Dichtfunktion erhalten bleibt. In vielen Fällen hat die jeweilige Dichtfläche auch noch eine Zentrierfunktion. Durch Beschädigung der Dichtflächen können aufwendige Demontagen und Montagen von schweren Bauteilen notwendig werden. Insbesondere bei Gehäusen der sogenannten Topfbauweise - also Gehäuse, die keine horizontale bzw. sich in Längsachse des zylindrischen Gehäuses erstreckende Teilfuge aufweisen - ist die abdichtende Montage eines stirnseitigen Deckels besonders schwierig. Der stirnseitige Deckel ist regelmäßig sehr schwer und bedarf einer belastbaren Führung bei Einführung des Deckels in das Topfgehäuse, wenn der Deckel nicht stirnseitig aufliegt, sondern zumindest teilweise von dem mantelförmigen Gehäuse in Umfangsrichtung umgeben ist. Ist der Deckel gleichzeitig Träger der Dichtungen, so kann es vorkommen, dass ein gewollter oder ungewollter Kontakt der Dichtung mit dem Gehäuse zu einer Beschädigung der Dichtung führt, weil der Deckel aufgrund seines hohen Gewichtes und der schlechten Zugänglichkeit in der Montagesituation die Dichtung bei dem Kontakt zu hoch belastet.

Aus der FR 2044 199 A5 ist bereits eine gattungsgemäße Anordnung bekannt.
Aus der US 6 923 476 B2, der JP H11-303 998 A und der DE 10 2011 108 273 A1 sind bereits Abdichtungen mit verschiedenen Dichtungsträgern bekannt.
Aus der US3975991A1 ist ein hydraulischer Kolben bekannt mit einem Dichtungsträger im Inneren des Zylinders.

Die Erfindung hat es sich zur Aufgabe gemacht, durch konstruktive Maßnahmen eine beschädigungsfreie Deckelmontage sicherzustellen und gleichzeitig den Montagevorgang selbst zu vereinfachen sowie eine gute Abdichtung zu gewährleisten.

Zur Lösung der erfindungsgemäßen Aufgabe wird eine Anordnung mit mindestens einer Dichtung gemäß der eingangs genannten Art mit den zusätzlichen Merkmalen des kennzeichnenden Teils des Anspruchs 1 vorgeschlagen. Die jeweils rückbezogenen Unteransprüche beinhalten vorteilhafte Weiterbildungen der Erfindung.

Der erfindungsgemäße Dichtungsträger mit den sich in Umfangsrichtung erstreckenden radialen und axialen Nuten, die mit den dort eingebrachten Dichtungen gegen jeweils eine radiale bzw. axiale Oberfläche des Gehäuses bzw. des Deckels dichten, ermöglicht zunächst eine Montage des Deckels in das Gehäuse ohne eine Dichtung, so dass eine Beschädigung der Dichtung in diesem Montageschritt ausgeschlossen ist. Der Dichtungsträger mit den darin befindlichen Dichtungen ist erheblich leichter und deswegen einfacherer zu montieren als der Deckel. Eine genau kontrollierte ggf. händische Montage des Dichtungsträgers kann deswegen einfach und beschädigungsfrei erfolgen. Die Erfindung sieht vor, dass der Deckel axial weiter im Inneren des Gehäuses angeordnet ist als der Dichtungsträger, so dass der Dichtungsträger mit den Dichtungen axial von außen an dem Deckel anliegt. Auf diese Weise ist eine einfache Kontrolle der Dichtfunktion möglich und ein ggf. notwendiger Austausch der Dichtung kann ohne die Montage des Deckels erfolgen. Weiterhin dient der Deckel für die Dichtung als thermischer Puffer sollte es sich bei dem in dem Druckbehälter bzw. Gehäuse vorliegenden Fluid um ein besonders heißes oder kaltes Fluid handeln.

Bevorzugt handelt es sich bei dem Gehäuse um ein Topfgehäuse, d.h. um ein Gehäuse ohne Teilfuge parallel zu der Längserstreckungsachse des Gehäuses. Sollte es sich bei dem Gehäuse um das Gehäuse einer Turbomaschine bzw. um einen Turboverdichter handeln, würde sich keine Teilfuge des Gehäuses parallel zu einer Rotationsachse der Turbomaschine erstrecken.

Eine andere vorteilhafte Weiterbildung der Erfindung sieht vor, dass der Dichtungsträger eine sich in Umfangsrichtung erstreckende zweite radiale Nut mit radialer Tiefenrichtung aufweist, in welcher eine zweite radiale Dichtung angeordnet ist, die gegen eine radial innere Oberfläche des Gehäuses dichtet
und/oder der Dichtungsträger eine sich in Umfangsrichtung erstreckende zweite axiale Nut mit axialer Tiefenrichtung aufweist, in welcher eine zweite axiale Dichtung angeordnet ist, die gegen eine axiale Oberfläche des Deckels dichtet.

Eine weitere vorteilhafte Weiterbildung der Erfindung sieht vor, dass zwischen der ersten radialen Nut und der zweiten radialen Nut eine sich in Umfangsrichtung erstreckende radiale Absaugenut an dem Dichtungsträger vorgesehen ist und/oder zwischen der ersten axialen Nut und der zweiten axialen Nut eine sich in Umfangsrichtung erstreckende axiale Absaugenut an dem Dichtungsträger vorgesehen ist,
welche Absaugenut(en) mit mindestens einer Absaugeleitung in Verbindung steht(en).

Mit besonderem Vorteil ist es sinnvoll, wenn sich die Absaugeleitung von der axialen Absaugenut durch den Dichtungsträger zur radialen Absaugenut und sich von der radialen Absaugenut die Absaugeleitung durch das Gehäuse fortsetzt. Auf diese Weise ist es möglich, nur eine einzige Absaugung, die in die Absaugeleitung mündet vorzusehen und gleichzeitig mit dieser Absaugung die radiale Dichtung und die axiale Dichtung insbesondere gegen das Austreten von toxischen oder explosiven Gasen abzusichern. Zweckmäßig ist der Dichtungsträger aus einem Material von besonders hoher Festigkeit gefertigt. Besonders bevorzugt ist der Dichtungsträger selbst aus einem Metall gefertigt, so dass eine hohe Formstabilität und chemische Beständigkeit gegenüber ggf. aggressiven Prozessfluiden gewährleistet ist.

Zweckmäßig kann die erfindungsgemäße Anordnung Befestigungselemente für den Deckel an dem Gehäuse umfassen, wobei die Befestigungselemente einen in Umfangsrichtung sich erstreckenden und in Umfangsrichtung segmentierten Befestigungsring umfassen, der an dem Dichtungsträger axial anliegt und mittelbar oder unmittelbar an dem Gehäuse befestigt und/oder abgestützt ist. Mit einem solchen auch als Scherring bekannten Befestigungsverfahren können platzsparend der Deckel und der Dichtungsträger an dem Gehäuse befestigt werden, wobei gleichzeitig hohe Befestigungskräfte ermöglicht sind.

Zweckmäßig sind die in Umfangsrichtung segmentierten Befestigungsringe radial angeschraubt und axial an einem radial nach innen vortretenden Vorsprung des Gehäuses abgestützt. Ebenso ist es zweckmäßig, dass der Deckel im Inneren des Gehäuses axial an einem radial nach innen vortretenden Absatz abgestützt ist, welcher Absatz als Montageanschlag dient. Der Gehäusedeckel wird in Achsrichtung in das Gehäuse eingeschoben und durch in Umfangsrichtung geteilte Scherringe gehalten. Aus der EP 0 155 581 A2 sind Scherringe bekannt. Diese werden durch eine am Gehäuse befestigte Halterung fixiert. Die beiden radial nach innen vortretenden Vorsprünge bilden mit einem axial zwischen diesen Vorsprüngen befindlichen Abschnitt des Gehäuses eine sich in Umfangsrichtung erstreckende Klammer, welche im Zusammenwirken mit den Befestigungselementen die Zusammenstellung aus dem Dichtungsträger mit den Dichtungen und dem Deckel unter einer axiale Vorspannkraft setzt. Ein einfacher Vorteil dieser Anordnung liegt in der Möglichkeit, dass in dem Gehäuse ein Überdruck herrscht und somit der Deckel gegen die axiale Dichtung des Dichtungsträgers gedrückt wird, so dass sich der Dichtungseffekt mit zunehmendem Innendruck verstärkt.

Im Folgenden ist die Erfindung anhand eines speziellen Ausführungsbeispiels unter Bezugnahme auf Zeichnungen näher verdeutlicht.

Es zeigen:
- Figur 1: eine schematische Axialschnittansicht einer erfindungsgemäßen Anordnung und
- Figur 2: eine Detailansicht in schematischer Darstellung gemäß II aus der Figur 1.

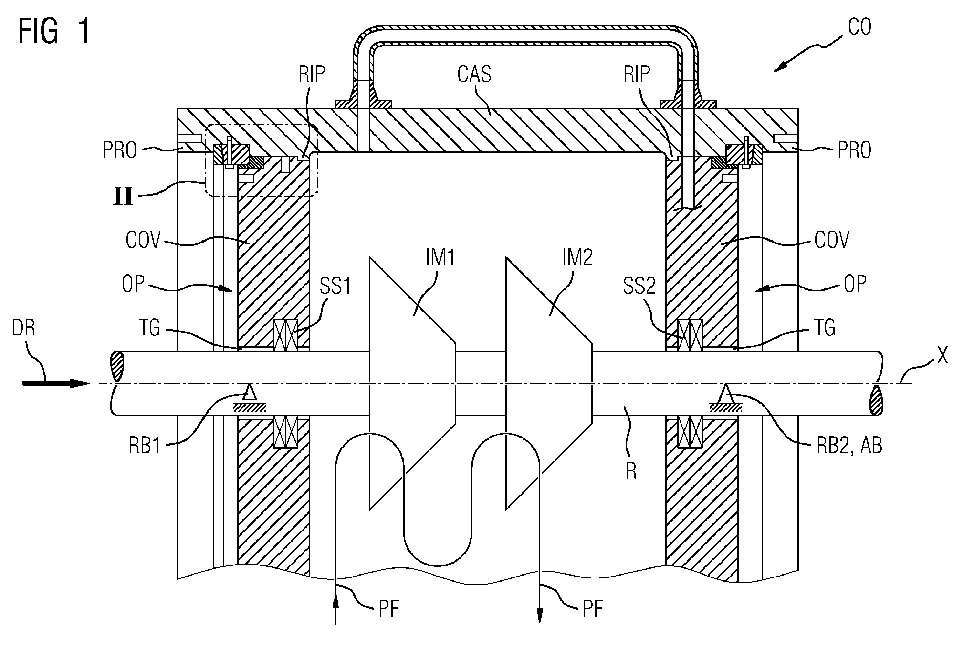

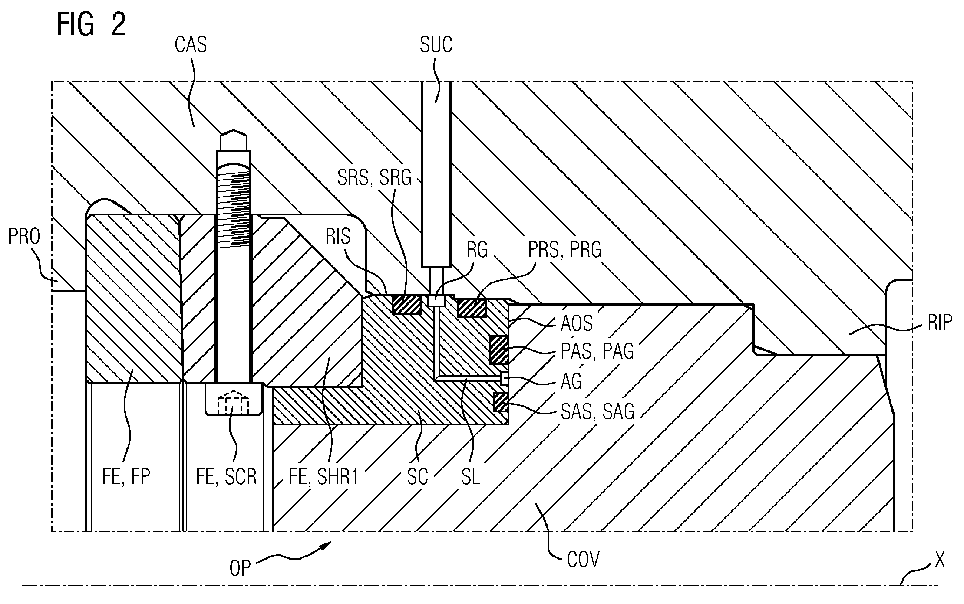

Die schematische Darstellung der Figur 1 zeigt einen Axialschnitt durch eine erfindungsgemäße Anordnung mit einer Dichtung, wobei die Figur 2 einen mit II bezeichneten Detailausschnitt aus der Figur 1 zeigt.

Ein bevorzugtes Anwendungsfeld der Erfindung ist der Einsatz in Turbomaschinen, insbesondere Turboverdichtern oder Turboexpandern, wie dies in Figur 1 anhand eines Verdichters dargestellt ist. Der in Figur 1 dargestellte Verdichter CO umfasst einen sich entlang einer Längsachse X eines Gehäuses CAS erstreckenden Rotor R, der mit zwei Laufrädern, einem ersten Laufrad IM1 und einem zweiten Laufrad IM2 bestückt ist. Andeutungsweise zeigt die Figur 1, dass ein Prozessfluid PF die Verdichtung mittels der beiden Laufräder IM1, IM2 durchläuft und anschließend das Gehäuse CAS verlässt. Bei dem Gehäuse CAS handelt es sich um ein Gehäuse in sogenannter Topfbauweise, d.h., dass das Gehäuse CAS keine Teilfuge parallel zu der Längserstreckung des Gehäuses CAS hat. Im Wesentlichen setzt sich das dargestellte Gehäuse CAS aus einem mantelförmigen Teil zusammen und wird an stirnseitigen Öffnungen OP mittels zweier Deckel COV verschlossen. Die Deckel COV sind von dem Gehäuse CAS, das zylinderförmig ist, entlang des Umfangs umgeben. Der Rotor R ist auf beiden Seiten jeweils durch eine Durchführung TG des dortigen Deckels COV aus dem Gehäuse CAS herausgeführt. Damit es nicht zu Leckagen aufgrund der Durchführung TG des Rotors R durch die Deckel COV kommt, sind auf beiden Seiten Wellendichtungen SS1, SS2 zur Abdichtung des sich ergebenden Spaltes zwischen dem stehenden Deckel COV und dem sich drehenden Rotor R vorgesehen. Zur Lagerung des Rotors R an dem Gehäuse CAS sind Radiallager RB1, RB2 vorgesehen. Eine axiale Lagerung erfolgt mittels eines Axiallagers AB. Die Lager RB1, RB2, AB zur Lagerung des Rotors R sind besonders vorteilhaft jeweils an dem Deckel angebracht, so dass der Deckel COV jeweils die Lagerkräfte auch im Betrieb auf das Gehäuse CAS überträgt. Als weitere vorteilhafte Weiterbildung der Erfindung zeigt das Ausführungsbeispiel außerdem, dass die Wellendichtungen SS1, SS2 jeweils an dem dort befindlichen stirnseitigen Deckel COV angebracht sind - wie die Lager RB1 bzw. AB, RB2.

Der ggf. hohe Innendruck in dem Gehäuse CAS macht eine besonders massive Ausbildung der stirnseitigen Deckel COV erforderlich. Die in der vorteilhaften Weiterbildung der Erfindung zusätzlich an den Deckel angebrachten Radiallager und ggf. Axiallager und Wellendichtungen erfordern eine noch belastbare Ausbildung der stirnseitigen Deckel COV.

Die Figur 2 zeigt die linksseitige Anordnung der erfindungsgemäßen Dichtung an dem Deckel COV. Der Deckel COV ist axial an einem radial nach innen vorstehenden Absatz RIP des Gehäuses CAS abgestützt. Aus dem axialen Deckel COV liegt ein Dichtungsträger SC mit dort an dem Dichtungsträger SC angebrachten Dichtungen an. In weiterer axialer Abfolge in Richtung des Gehäuseäußeren sind die Befestigungselemente FE angeordnet, die den Dichtungsträger SC und den Deckel COV gegen den radial nach innen vorstehenden Absatz RIP vorspannen. Die Befestigungselemente bestehen hierbei aus einem Passstück FP und einem Befestigungsring, wobei sich das Passstück und der Befestigungsring SHR1 jeweils segmentiert in Umfangsrichtung erstrecken. Der Befestigungsring SRH1 ist mittels einer Schraube SCR unmittelbar an dem Gehäuse CAS radial befestigt. Das Passstück FP, der Befestigungsring SHR1 und die Schraube SCR wirken derart zusammen, dass beim Anziehen der sich in radialer Richtung erstreckenden Schraube SCR die axiale Vorspannkraft auf den Dichtungsträger SC und den Deckel COV erhöht. Hierzu können das Passstück FP und der Befestigungsring SHR1 bevorzugt an ihren gegenseitigen Anlageflächen etwas schräg ausgebildet sein, so dass sich mit zunehmender Verlagerung des Befestigungsrings SHR nach radial außen durch das Anziehen der Schraube SCR die axiale Breite der Gesamtanordnung der Befestigungselmente FE vergrößert. Das Passstück FP und der Befestigungsring SHR1 stützen sich axial an einem radial nach innen vortretenden Vorsprung PRO des Gehäuses CAS ab. Der Befestigungsring SHR1 könnte hierbei axial auch direkt an dem nach innen vortretenden Vorsprung PRO des Gehäuses CAS abgestützt sein.

Der Dichtungsträger SC weist eine sich in Umfangsrichtung erstreckende erste radiale Nut PRG mit radialer Tiefenrichtung auf, welche eine erste radiale Dichtung PRS aufnimmt, die gegen eine radial innere Oberfläche RIS des Gehäuses CAS dichtet. Neben der ersten radialen Nut PRG ist eine zweite radiale Nut SRG mit einer zweiten radialen Dichtung SRS des Dichtungsträgers SC vorgesehen mit der gleichen Dichtfunktion. Der Dichtungsträger weist eine sich in Umfangsrichtung erstreckende erste axiale Nut PAG mit axialer Tiefenrichtung auf, in welcher eine erste axiale Dichtung PAS angeordnet ist, die gegen eine axiale Oberfläche AOS des Deckels COV dichtet. Neben der ersten axialen Nut PAG weist der Dichtungsträger SC eine zweite axiale Nut SAG mit einer zweiten axialen Dichtung SAS von im wesentlichen der gleichen Dichtfunktion auf. Eine axiale Absaugenut AG ist in dem Dichtungsträger SC zwischen der ersten axialen Dichtungsnut und der zweiten axialen Dichtungsnut zur Absaugung etwaigen austretenden Prozessfluids vorgesehen. Eine radiale Absaugenut RG ist zwischen der ersten radialen Dichtungsnut und der zweiten radialen Dichtungsnut zu dem gleichen Zweck vorgesehen. Eine Absaugeleitung SL verbindet die axiale Absaugenut AG mit der radialen Absaugenut RG und einer Absaugung SUC. Die Verbindung mittels der Absaugeleitung SL zwischen der axialen Absaugenut AG und der radialen Absaugenut RG verläuft durch den Dichtungsträger SC.

## Patentansprüche

1. Anordnung mit einer Dichtung, umfassend:
- ein Gehäuse (CAS),
- einen Deckel (COV),
- mindestens eine Dichtung,
wobei das Gehäuse (CAS) eine Längsachse (X) aufweist, wobei der Deckel (COV) zum Verschließen einer stirnseitigen Öffnung (OP) des Gehäuses (CAS) in axialer Richtung in das Gehäuse (CAS) eingebracht wird,
wobei
- die Anordnung einen Dichtungsträger (SC) aufweist,
- der Dichtungsträger (SC) eine sich in Umfangsrichtung erstreckende erste radiale Nut (PRG) mit radialer Tiefenrichtung aufweist,
in welcher ersten radialen Nut (PRG) eine erste radiale Dichtung (PRS) angeordnet ist, die gegen eine radial innere Oberfläche (RIS) des Gehäuses (CAS) dichtet,
- der Dichtungsträger (SC) eine sich in Umfangsrichtung erstreckende erste axiale Nut (PAG) mit axialer Tiefenrichtung aufweist,
in welcher ersten axialen Nut (PAG) eine erste axiale Dichtung (PAS) angeordnet ist, die gegen eine axiale Oberfläche (AOS) des Deckels (COV) dichtet,
**dadurch gekennzeichnet, dass**
der Deckel (COV) weiter axial in einem Inneren des Gehäuses (CAS) angeordnet ist als der Dichtungsträger (CS), so dass der Dichtungsträger (SC) mit den Dichtungen axial von außen an dem Deckel (COV) anliegt.

2. Anordnung nach Anspruch 1,
wobei das Gehäuse (CAS) als Topfgehäuse ohne sich parallel zur Längsachse (X) erstreckende Teilfuge ausgebildet ist.

3. Anordnung nach einem der vorhergehenden Ansprüche, wobei der Dichtungsträger (SC) eine sich in Umfangsrichtung erstreckende zweite radiale Nut (SRG) mit radialer Tiefenrichtung aufweist, in welcher eine zweite radiale Dichtung (SRS) angeordnet ist, die gegen die radial innere Oberfläche (RIS) des Gehäuses (CAS) dichtet und/oder
der Dichtungsträger (SC) eine sich in Umfangsrichtung erstreckende zweite axiale Nut (SAG) mit axialer Tiefenrichtung aufweist, in welcher eine zweite axiale Dichtung (SAS) angeordnet ist, die gegen eine axiale Oberfläche (AOS) des Deckels (COV) dichtet.

4. Anordnung nach Anspruch 3,
wobei zwischen der ersten radialen Nut (PRG) und der zweiten radialen Nut (SRG) eine sich in Umfangsrichtung erstreckende radiale Absaugenut (RG) an dem Dichtungsträger vorgesehen ist und/oder zwischen der ersten axialen Nut (PAG) und der zweiten axialen Nut (SAG) eine sich in Umfangsrichtung erstreckende axiale Absaugenut (AG) vorgesehen ist, welche Absaugenut/en mit mindestens einer Absaugeleitung (SL) in Verbindung steht/en.

5. Anordnung nach Anspruch 4,
wobei sich die Absaugeleitung (SL) von der axialen Absaugenut (AG) durch den Dichtungsträger (SC) zur radialen Absaugenut (RG) erstreckt und sich von der radialen Absaugenut (RG) durch das Gehäuse (CAS) fortsetzt.

6. Anordnung nach mindestens einem der vorhergehenden Ansprüche,
wobei der Dichtungsträger (SC) im Wesentlichen aus Metall besteht.

7. Anordnung nach einem der vorhergehenden Ansprüche,
wobei die Anordnung Befestigungselemente (FE) umfasst, um den Deckel an dem Gehäuse (CAS) zu befestigen, wobei die Befestigungselemente (FE) einen in Umfangsrichtung sich zumindest teilweise erstreckenden und in Umfangsrichtung segmentierten Befestigungsring (SHR1) umfassen, der an dem Dichtungsträger (SC) axial anliegt und mittelbar oder unmittelbar an dem Gehäuse (CAS) befestigt und/oder abgestützt ist.

8. Anordnung nach Anspruch 7,
wobei der Befestigungsring (SHR1) radial an dem Gehäuse (CAS) befestigt ist und axial an einem radial nach innen vortretenden Vorsprung (PRO) des Gehäuses (CAS) abgestützt ist.

9. Anordnung nach Anspruch 8,
wobei der Deckel axial an einem radial nach innen vorstehenden Absatz (RIP) im Inneren des Gehäuses (CAS) abgestützt ist, welcher Absatz (RIP) dem Deckel (COV) als Gegenlager für axiale Kräfte aus den Befestigungselementen (FE) des Deckels (COV) dient.

10. Anordnung nach Anspruch 9,
wobei die Anordnung derart ausgebildet ist, dass die Befestigungselement (FE) axiale Druckkräfte auf den Dichtungsträger (SC) ausüben, welcher Dichtungsträger (SC) diese axialen Kräfte auf den Deckel (COV) überträgt und der Deckel (COV) diese axialen Kräfte auf den radial nach innen vortretenden Absatz (RIP) überträgt.

## Claims

1. Arrangement having a seal, comprising:
- a casing (CAS),
- a cover (COV),
- at least one seal,
wherein the casing (CAS) has a longitudinal axis (X), wherein the cover (COV) is introduced into the casing (CAS) in the axial direction in order to close an end-face opening (OP) of the casing (CAS),
wherein
- the arrangement has a seal carrier (SC),
- the seal carrier (SC) has a first radial groove (PRG) which extends in the circumferential direction and which has a radial depth direction,
in which first radial groove (PRG) there is arranged a first radial seal (PRS) which seals against a radially inner surface (RIS) of the casing (CAS),
- the seal carrier (SC) has a first axial groove (PAG) which extends in the circumferential direction and which has an axial depth direction,
in which first axial groove (PAG) there is arranged a first axial seal (PAS) which seals against an axial surface (AOS) of the cover (COV),
**characterized in that**
the cover (COV) is arranged axially further inside the casing (CAS) than the seal carrier (SC), such that the seal carrier (SC) bears with the seals axially against the cover (COV) from the outside.

2. Arrangement according to Claim 1,
wherein the casing (CAS) is in the form of a barrel casing without a parting joint extending parallel to the longitudinal axis (X).

3. Arrangement according to one of the preceding claims, wherein the seal carrier (SC) has a second radial groove (SRG) extending in the circumferential direction with a radial depth direction, in which there is arranged a second radial seal (SRS) which seals against the radially inner surface (RIS) of the casing (CAS)
and/or
the seal carrier (SC) has a second axial groove (SAG) extending in the circumferential direction with an axial depth direction, in which there is arranged a second axial seal (SAS) which seals against an axial surface (AOS) of the cover (COV).

4. Arrangement according to Claim 3,
wherein between the first radial groove (PRG) and the second radial groove (SRG) there is provided on the seal carrier a radial suction groove (RG) extending in the circumferential direction, and/or between the first axial groove (PAG) and the second axial groove (SAG) there is provided an axial suction groove (AG) extending in the circumferential direction, which suction groove(s) is/are connected to at least one suction line (SL).

5. Arrangement according to Claim 4,
wherein the suction line (SL) extends from the axial suction groove (AG) through the seal carrier (SC) to the radial suction groove (RG) and continues from the radial suction groove (RG) through the casing (CAS).

6. Arrangement according to at least one of the preceding claims,
wherein the seal carrier (SC) is essentially made of metal.

7. Arrangement according to one of the preceding claims, wherein the arrangement comprises fixing elements (FE) for fixing the cover to the casing (CAS), wherein the fixing elements (FE) comprise a fixing ring (SHR1) which extends at least in part in the circumferential direction and is segmented in the circumferential direction, and which bears axially against the seal carrier (SC) and is directly or indirectly fixed and/or supported on the casing (CAS).

8. Arrangement according to Claim 7,
wherein the fixing ring (SHR1) is fixed radially on the casing (CAS) and is supported axially on a radially inwards-extending projection (PRO) of the casing (CAS).

9. Arrangement according to Claim 8,
wherein the cover is supported axially on a radially inwards-projecting shoulder (RIP) within the casing (CAS), which shoulder (RIP) serves the cover (COV) as a thrust bearing for axial forces from the fixing elements (FE) of the cover (COV).

10. Arrangement according to Claim 9,
wherein the arrangement is designed such that the fixing elements (FE) exert axial compressive forces on the seal carrier (SC), which seal carrier (SC) transmits these axial forces to the cover (COV) and the cover (COV) transmits these axial forces to the radially inwards-projecting shoulder (RIP).

## Revendications

1. Dispositif ayant un garniture d'étanchéité comprenant :
- une enveloppe ( CAS ),
- un couvercle ( COV ),
- au moins un garniture d'étanchéité,
dans lequel l'enveloppe ( CAS ) a un axe ( X ) longitudinal, dans lequel le couvercle ( COV ) est, pour fermer l'ouverture ( OP ) du côté frontal de l'enveloppe ( CAS ), introduit dans l'enveloppe ( CAS ) dans la direction axiale,
dans lequel,
- le dispositif a un porte-garniture d'étanchéité ( SC ),
- le porte-garniture d'étanchéité ( SC ) a une première rainure ( PRG ) radiale s'étendant dans la direction périphérique et ayant une direction en profondeur radiale, première rainure ( PRG ) radiale dans laquelle est disposée une première garniture ( PRS ) radiale qui assure une étanchéité contre une surface ( RIS ) intérieure radialement de l'enveloppe ( CAS ),
- le porte-garniture d'étanchéité ( SC ) a une première rainure ( PAG ) axiale s'étendant dans la direction périphérique et ayant une direction en profondeur axiale, première rainure ( PAG ) axiale dans laquelle est disposée une première garniture d'étanchéité ( PAS ) axiale qui assure l'étanchéité contre une surface ( AOS ) axiale du couvercle ( COV ),
**caractérisé en ce que**
le couvercle ( COV ) est disposé plus loin axialement à l'intérieur de l'enveloppe ( CAS ) que le porte-garniture d'étanchéité ( CS ), de manière à ce que le porte-garniture d'étanchéité ( SC ) s'applique par les garnitures d'étanchéité axialement de l'extérieur au couvercle ( COV ).

2. Dispositif suivant la revendication 1,
dans lequel l'enveloppe ( CAS ) est constituée en enveloppes en pot sans joint s'étendant parallèlement à l'axe ( X ) longitudinal.

3. Dispositif suivant l'une des revendications précédentes, dans lequel le porte-garniture d'étanchéité ( SC ) a une deuxième rainure ( SRG ) radiale s'étendant dans la direction périphérique et ayant une direction en profondeur radiale dans laquelle est disposée une deuxième garniture d'étanchéité ( SRS ) radiale qui assure l'étanchéité contre la surface ( RIS ) intérieure radialement de l'enveloppe ( CAS ) et/ou le porte-garniture d'étanchéité ( SC ) a une deuxième rainure ( SAG ) axiale s'étendant dans la direction périphérique et ayant une direction en profondeur axiale dans laquelle est disposée une deuxième garniture ( SAS ) d'étanchéité axiale qui assure l'étanchéité contre une surface ( AOS ) axiale du couvercle ( COV ).

4. Dispositif suivant la revendication 3,
dans lequel il est prévu sur le porte-garniture d'étanchéité une rainure ( RG ) d'aspiration radiale s'étendant dans la direction périphérique entre la première rainure ( PRG ) radiale et la deuxième rainure ( SRG ) radiale et/ou il est prévu une rainure ( AG ) d'aspiration axiale s'étendant dans la direction périphérique entre la première rainure ( PAG ) axiale et la deuxième rainure ( SAG ) axiale, rainure/rainures qui communique/communiquent avec au moins un conduit ( SL ) d'aspiration.

5. Dispositif suivant la revendication 4,
dans lequel le conduit ( SL ) d'aspiration s'étend de la rainure ( AG ) d'aspiration axiale à la rainure ( RG ) d'aspiration radiale à travers le porte-garniture d'étanchéité ( SC ) et se poursuit à partir de la rainure ( RG ) d'aspiration radiale dans l'enveloppe ( CAS ).

6. Dispositif suivant au moins l'une des revendications précédentes,
dans lequel le porte-garniture d'étanchéité ( SC ) est constitué essentiellement en métal.

7. Dispositif suivant l'une des revendications précédentes, dans lequel le dispositif comprend des éléments ( FE ) de fixation pour fixer le couvercle à l'enveloppe ( CAS ), les éléments ( FE ) de fixation comprenant un anneau ( SHR1 ) de fixation s'étendant au moins en partie dans la direction périphérique et segmenté dans la direction périphérique, qui s'applique axialement au porte-garniture d'étanchéité ( SC ) et qui est fixé et/ou qui s'appuie directement ou indirectement sur l'enveloppe ( CAS ).

8. Dispositif suivant la revendication 7,
dans lequel l'anneau ( SHR1 ) de fixation est fixé radialement à l'enveloppe ( CAS ) et s'appuie axialement sur une saillie ( PRO ) de l'enveloppe ( CAS ) avançant radialement vers l'intérieur.

9. Dispositif suivant la revendication 8,
dans lequel le couvercle s'appuie axialement à l'intérieur de l'enveloppe ( CAS ) sur un ressaut ( RIP ) en saillie radialement vers l'intérieur, lequel ressaut ( RIP ) sert au couvercle ( COV ) de butée pour des forces axiales provenant des éléments ( FE ) de fixation du couvercle ( COV ).

10. Dispositif suivant la revendication 9,
dans lequel le dispositif est constitué de manière à ce que l'élément ( FE ) de fixation applique des forces de pression axiales au porte-garniture d'étanchéité ( SC ) lequel porte-garniture d'étanchéité ( SC ) transmet ses forces axiales au couvercle ( COV ) et le couvercle ( COV ) transmet ses forces axiales au ressaut ( RIP ) avançant radialement vers l'intérieur.
